# EUROPEAN PATENT APPLICATION

(11) **EP 1 780 092 A1**
(43) Date of publication of application: **02.05.2007**
(21) Application number: 05425763.9
(22) Date of filing: 28.10.2005
(51) Int. Cl.: B62B 3/14

(54) **Writing board for shopping trolleys or baskets**

(71) Applicant: Megaplast di Galli Stefano, 20050 Sovico MI (IT)
(72) Inventor: Braga, Rosaria, 20050 Sovico (MI) (IT)
(74) Representative: Pizzoli, Antonio

(57) **Abstract**

Writing board for shopping trolleys or baskets, which comprises a flat support (1) suitable for being fixed to the handle (17) of a shopping trolley or basket and for supporting at least one writable and/or readable item (2), wherein the flat support (1) is made of a molded plastic material, one or more hooks (16) being arranged behind the flat support (1) for fixing the latter in a removable manner to said handle (17).

## Description

The present invention relates to a writing board for shopping trolleys or baskets, and in particular a writing board which can be applied to the handle of a shopping trolley or basket.

Known writing boards comprise a flat support suitable for supporting at least one writable and/or readable item, for example paper sheets, a notebook, an electronic agenda, a palm computer, etc. These known writing boards are made of relatively expensive materials, in particular steel, as the same shopping trolleys, and therefore are fixed in an irremovable manner to the handle of a shopping trolley for avoiding their removal and/or theft. Writing boards for shopping baskets are instead unknown.

It is therefore an object of the present invention to provide a writing board which is free from said disadvantages. Said object is achieved with a writing board, the main features of which are disclosed in the first claim and other features are disclosed in the subsequent claims.

The writing board according to the present invention can be manufactured by molding a plastic material in a simple and economical manner, so that it can be sold with a low cost on a large scale to the public, for example for promotional purposes. For this purpose, the writing board is provided with particular hooks suitable for the removable fixing to the handle not only of a shopping trolley, but also of a shopping basket.

These hooks can be manufactured in a single piece with the flat support, for further reducing the costs, or they can be retracted on the flat support or removed from the latter, so that the writing board occupies not much space when it is not applied to a shopping trolley or basket. In any case, the writing board is light and not bulky, so that it can be easily transported, for example in a bag.

The writing board according to the present invention can further be advantageously provided with a canal for containing at least one coin, generally necessary for using a shopping trolley, and/or of a seat for a pen or the like, for writing on a writable item arranged on the board.

Thanks to the particular advantageous structure of the writing board according to the present invention, the above mentioned and further accessories, such as walls and fins, are preferably made in a single plastic piece molded with the flat support. This arrangement also allows to easily apply trademarks or other distinguishing signs onto the writing board, in particular onto its fins, which are well visible to the public.

Further advantages and features of the writing board according to the present invention will become clear to those skilled in the art from the detailed and non-limiting description of some embodiments thereof with reference to the attached drawings, wherein:
- figure 1 shows a front view of the first embodiment of the writing board, without hooks;
- figure 2 shows a view sectioned along plane II-II of figure 1;
- figure 3 shows a view sectioned along plane III-III of figure 1;
- figure 4 shows a view sectioned along plane IV-IV of figure 1;
- figure 5 shows a rear view of the writing board of figure 1 with the retracted hooks;
- figure 6 shows a side view of the writing board of figure 1 with the extended hooks;
- figure 7 shows a top view of the writing board of figure 1 with the extended hooks;
- figure 8 shows a bottom view of the writing board of figure 1 with the extended hooks;
- figures 9 and 10 show side views of other two embodiments of the writing board according to the present invention;
- figures 11 and 12 show cross-sectioned views of further two embodiments of the writing board according to the present invention;
- figure 13 shows a front view of a further embodiment of the writing board according to the present invention; and
- figure 14 shows a side view of the writing board of figure 13.

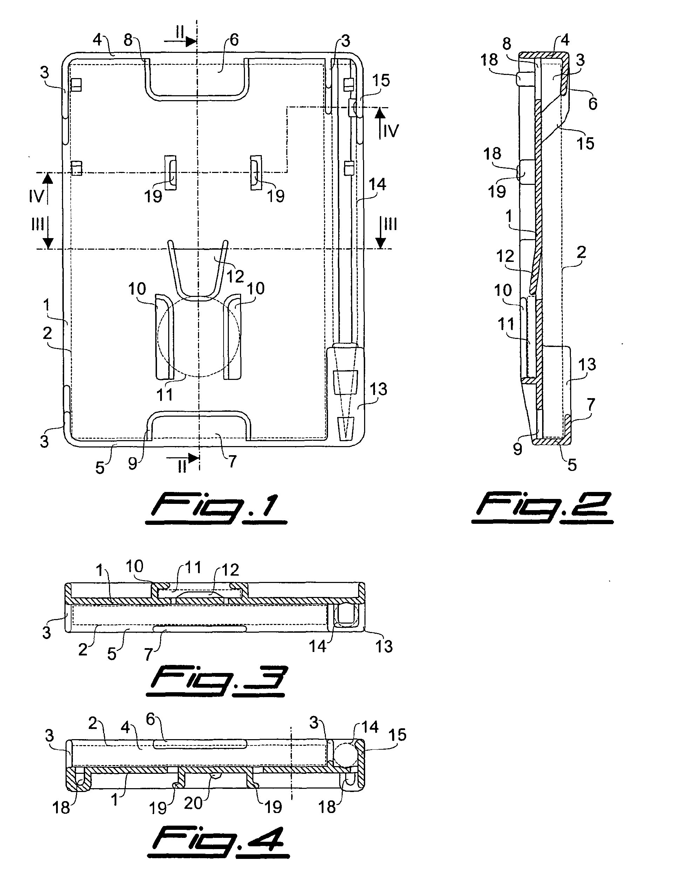

Referring to figures 1 to 4, it is seen that the writing board according to the present invention comprises in a known way a flat support 1, for example substantially rectangular-shaped, which is made of a molded plastic material and is suitable for supporting at least one writable and/or readable item 2 (shown with broken lines). For keeping item 2 in position, the edges of the flat support 1 are provided with one or more side walls 3, upper walls 4 and/or lower walls 5, made in a single piece with the flat support 1. The side walls 3, upper walls 4 and/or lower walls 5 are preferably made in a single piece with one or more fins, in particular an upper fin 6 and a lower fin 7, suitable for retaining item 2 against the flat support 1. For this purpose, said fins 6, 7 are slightly bent toward the flat support 1, so that with their elasticity urge item 2 against the flat support 1 and retain it elastically. For obtaining fins 6, 7, the flat support 1 is provided with openings 8, 9, respectively, which are arranged behind fins 6, 7 and are larger than the latter. A canal 10 suitable for containing at least one coin 11 (shown with broken lines) is arranged behind the flat support 1, while a tongue 12 protrudes behind the flat support 1 for elastically retaining coin 11 in canal 10. A seat 13 is arranged along an edge of the flat support 1, so as to contain the tip of a pen or the like 14 (shown with broken lines). One or more walls 15 protrude from the sides of the flat support 1 for elastically retaining said pen or the like 14 in seat 13.

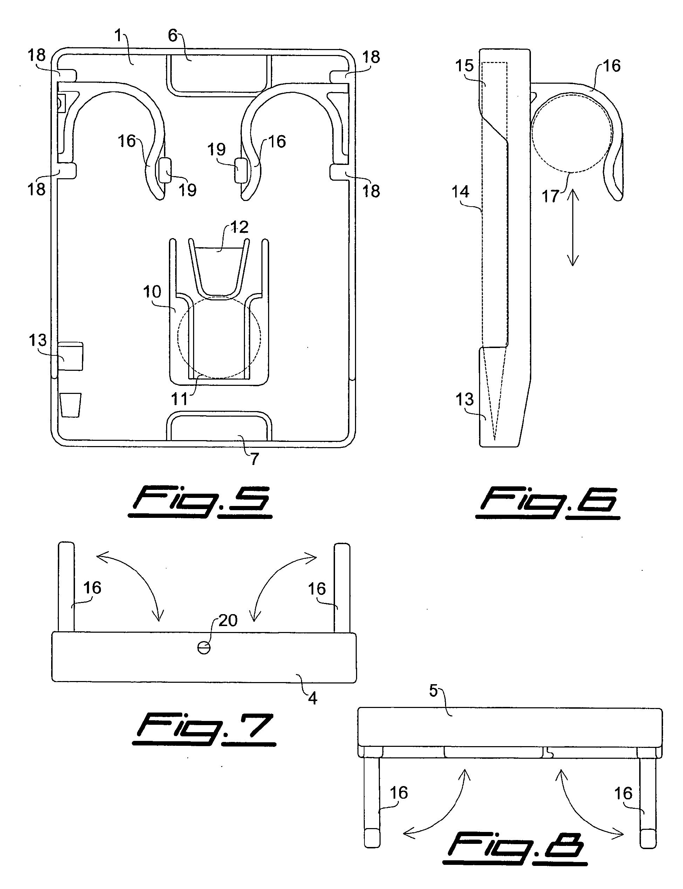

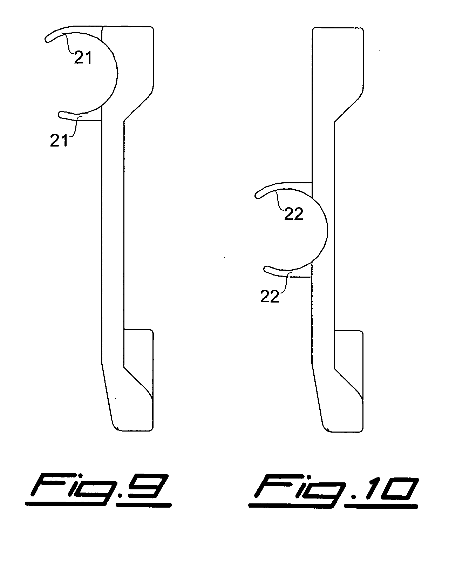

Referring also to figures 5 to 8, it is seen that, according to the invention, one or more hooks 16 are suitably arranged behind the upper portion of the flat support 1 for fixing the latter in a removable manner to a handle 17 (shown with broken lines) of a shopping trolley or basket. For this fixing, hooks 16 are applied to handle 17 in the direction of the arrow of figure 6. In the present embodiment, hooks 16 are mounted in a rotating manner in hubs 18 fixed to the flat support 1, so that hooks 16 can rotate around vertical axes in the direction of the arrows of figures 7 and 8. One or more teeth 19 protrude behind the flat support 1 for elastically retaining hooks 16 in their retracted position. The upper wall 4 is preferably provided with at least one hole 20 for hanging the writing board. Canal 10, tongue 12, seat 13, hubs 18 and/or teeth 19 are preferably made in a single piece of a plastic material molded with the flat support 1 through openings made in the latter.

Figure 9 shows a second embodiment of the writing board according to the present invention, in which hooks 21 are made in a single piece with the flat support 1 and are arranged behind its upper portion.

Figure 10 shows a third embodiment of the writing board according to the present invention, in which hooks 22 are made in a single piece with the flat support 1 and are arranged behind its central portion.

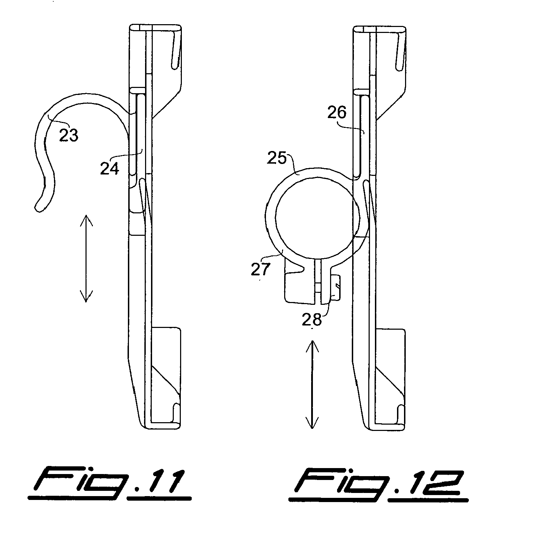

Figure 11 shows a fourth embodiment of the writing board according to the present invention, in which at least one hook 23 is joined to a plate 24 suitable for being inserted and locked into a seat which is arranged behind the flat support 1.

Figure 12 shows a fifth embodiment of the writing board according to the present invention, in which at least one hook 25 is joined to a plate 26 suitable for being inserted and locked into a seat which is arranged behind the flat support 1. Hook 25 includes a collar 27 provided with a screw 28 for locking the same hook around a handle of a shopping trolley or basket.

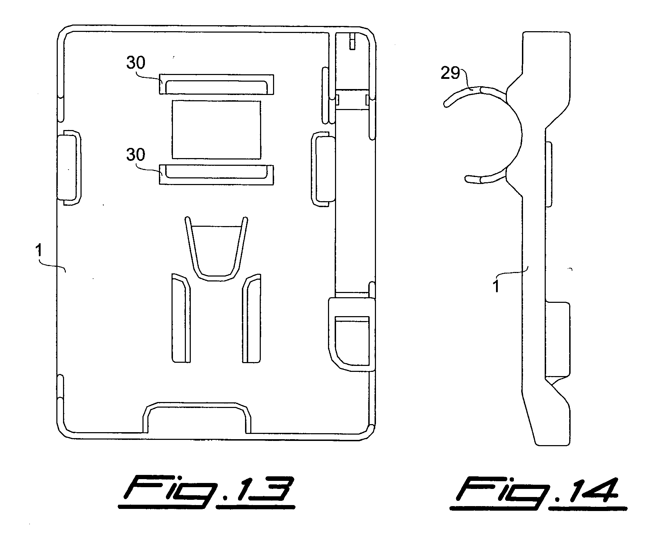

Figures 13 and 14 show a sixth embodiment of the writing board according to the present invention, in which hooks 29 are made in a single piece with the flat support 1 thanks to openings 30 made in the support itself.

Further modifications and/or additions may be made by those skilled in the art to the hereinabove described and illustrated embodiments of the invention, while remaining within the scope of the following claims.

## Claims

1. Writing board for shopping trolleys or baskets, which comprises a flat support (1) suitable for being fixed to the handle (17) of a shopping trolley or basket and for supporting at least one writable and/or readable item (2), **characterized in that** the flat support (1) is made of a molded plastic material, one or more hooks (16) being arranged behind the flat support (1) for fixing the latter in a removable manner to said handle (17).

2. Writing board according to the previous claim, **characterized in that** the flat support (1) is provided with one or more side walls (3), upper walls (4) and/or lower walls 5, made in a single piece of a molded plastic material with the flat support (1).

3. Writing board according to the previous claim, **characterized in that** said side walls (3), upper walls (4) and/or lower walls (5) are made in a single piece with one or more fins (6, 7) suitable for retaining said item (2) against the flat support (1).

4. Writing board according to the previous claim, **characterized in that** said fins (6, 7) are bent toward the flat support (1), so that with their elasticity urge item (2) against the flat support (1) and retain it elastically.

5. Writing board according to claim 3 or 4, **characterized in that** the flat support (1) is provided with openings (8, 9) which are arranged behind the fins (6, 7) and are larger than the latter.

6. Writing board according to one of the previous claims, **characterized in that** a canal (10) suitable for containing at least one coin (11) is arranged behind the flat support (1).

7. Writing board according to the previous claim, **characterized in that** a tongue (12) protrudes behind the flat support (1) for elastically retaining the coin (11) in the canal (10).

8. Writing board according to one of the previous claims, **characterized in that** a seat (13) suitable for containing the tip of a pen or the like (14) is arranged along an edge of the flat support (1).

9. Writing board according to the previous claim, **characterized in that** one or more walls (15) protrude from the sides of the flat support (1) for elastically retaining said pen or the like (14) in its seat (13).

10. Writing board according to one of the previous claims, **characterized in that** said hooks (16) are mounted in a rotating manner in hubs (18) fixed to the flat support (1).

11. Writing board according to the previous claim, **characterized in that** one or more teeth (19) protrude behind the flat support (1) for elastically retaining the hooks (16) in their retracted position.

12. Writing board according to one of the previous claims, **characterized in that** said canal (10), said tongue (12), said seat (13), said hubs (18) and/or said teeth (19) are made in a single piece of plastic material molded with the flat support (1) through openings made in the latter.

13. Writing board according to one of the previous claims, **characterized in that** the hooks (21; 22; 29) are made in a single piece of a plastic material molded with the flat support (1).

14. Writing board according to one of claims 1 to 12, **characterized in that** at least one hook (23; 25) is joined to a plate (24; 26) suitable for being inserted and locked into a seat which is arranged behind the flat support (1).

15. Writing board according to the previous claim, **characterized in that** said hook (25) includes a collar (27) provided with a screw (28) for locking the same hook (25) around a handle of a shopping trolley.
